# EUROPEAN PATENT APPLICATION

(11) **EP 2 339 229 A2**
(43) Date of publication of application: **29.06.2011**
(21) Application number: 10196226.4
(22) Date of filing: 21.12.2010
(51) Int. Cl.: F21V 14/08, F21S 8/12, F21W 101/10

(54) **Vehicular headlamp apparatus**

(30) Priority: 24.12.2009 JP 2009292920
(71) Applicant: KOITO MANUFACTURING CO., LTD, Tokyo (JP)
(72) Inventor: Ohshio, Hirohiko, Shizuoka-shi, Shizuoka (JP); Mochizuki, Kiyotaka, Shizuoka-shi, Shizuoka (JP)
(74) Representative: Intès, Didier Gérard André

(57) **Abstract**

To provide a vehicular headlamp apparatus (210) that is able to form a high-quality light distribution pattern white maintaining a simple structure inside a lamp unit (10) when the vehicle headlamp apparatus (210) includes a rotary drive type cylindrical shade (12), there is provided a bulb (14) that is able to irradiate light forward of a vehicle through a projection lens (20), a rotary shade (12) that is able to form a plurality of types of light distribution patterns using the light from the bulb (14) and that selectively forms any one of the plurality of light distribution patterns in accordance with a rotated state when the rotary shade (12) is driven for rotation, a drive actuator (24) that drives the rotary shade (12) for rotation, and an auxiliary shade (32) that is able to move in accordance with the rotated state of the rotary shade (12) and that moves to a position to block light from a side of the bulb (14), the light not participating in formation of the light distribution pattern selected through operation of the rotary shade (12).

## Description

### [Technical Field]

The present invention relates to a vehicular head lamp apparatus and, more particularly, to a structure of a vehicular headlamp apparatus that is able to change a light distribution pattern.

### [Related Art]

Conventionally, there is a variable light distribution-type vehicular headlamp apparatus in which a low beam is formed by blocking light from a light source with a shade and a high beam is formed when the light is not blocked with the shade. In addition, with an increase in performance of a vehicle recently, there is proposed a headlamp apparatus in which a headlamp forms a light distribution pattern that is different in shape from a standard low beam or a standard high beam in accordance with a surrounding situation. For example, a projection-type automobile headlamp described in Patent Document 1 includes a cylindrical shade that is driven for rotation about an axis of rotation. A plurality of shades extending in a direction along the axis of rotation are formed on the surface of the cylindrical shade. Then, the shape of the shade may be selected on the basis of a rotation stop position of the cylindrical shade. By so doing, a plurality of types of light distribution patterns may be selectively formed.

### [Prior Art Document ]

### [Patent Document]

### [Patent Document I ]

Japanese Patent Application Laid-Open (Kokai) No. JP-A-8-106803

### [Disclosure of the Invention]

### [Problem to be Solved by the Invention]

However, in the case of the rotary drive cylindrical shade described in Patent Document 1, a motor that serves as a driving source, a gear mechanism, and the like, need to be arranged inside a unlit having limited storage space in addition to the cylindrical bods. Therefore, the cylindrical shade and other components currently need to be in size, simplified and reduced in For example, both ends of the cylindrical shade are supported, and a driving system, such as the motor and the gear mechanism, is connected to the ends. That is, the cylindrical shade is arranged inside the lamp unit in a position in which the cylindrical shade is substantially hung in the air. As described above, when a low beam is formed, light from the light source is blocked by the cylindrical shade. On the other hand, when a high beam is formed, part of the surface of the cylindrical shade is largely cut away so as not to block light from the light source with the cylindrical shade. As a result, when the cylindrical shade moves the low beam shade so as to face an optical axis in order to form a low beam, the high beam cutout portion moves to a position below the optical axis. In this case, light passing above the low beam shade becomes light participating in low beam formation, and the other non-participating light needs to be blocked. However, as described above, as the high beam cutout portion moves to the position at which light should be blocked, there is a possibility that light passes through that position and cannot be sufficiently blocked. As a result, unnecessary light is irradiated to a portion that becomes a dark area in a low beam light distribution pattern, so the quality of distribution pattern may be impaired.

The present invention is made to solve the above described problem, and it is an object of the prevent invention to provide a vehicular headlamp apparatus that is able to form a high-quality light distribution pattern while maintaining a simple structure inside a lamp unit when the vehicular headlamp apparatus includes a rotary drive type cylindrical shade.

### [Means for Solving the Problem]

In order to solve the above problem, a vehicular headlamp apparatus according to an aspect of the present invention includes: a light source that is able to irradiate forward of a vehicle through a projection lens; a rotary shade that is able to form a plurality of types of light distribution using the light from the light source and selectively forms any one of the plurality of light distribution in with a rotated state when the rotary shade is driven for rotation; a drive actuator that drives the rotary shade for rotation; and an auxiliary shade that is able to movie accordance the rotated state of the rotary shade and that to a position to block light from a side of the light source, the light not participating in of the light distribution pattern selected through operation of the rotary shade.

According to the above aspect, the auxiliary shade blocks light from the light source side, the light not participating in formation of the light distribution pattern selected through operation of the rotary shade. That is, it is possible to block non-participating light without being influenced by the shape of the rotary shade. Then, only light allowed by the rotary shade to pass through is guided forward of the vehicle through the projection lens. The auxiliary shade is an auxiliary shade that moves in accordance with the rotated state of the rotary shade, so this does not lead to a complicated structure inside the lamp unit. As a result, it is possible to provide a high-quality light distribution pattern by removing inclusion of unnecessary light for forming a selected light distribution pattern while maintaining a simple structure inside the lamp unit.

The auxiliary shade may have a second engaging portion that engages a first engaging portion provided at a portion of the rotary shade, and may move together with the rotary shade in such a manner that the first engaging portion that moves with rotation operation of the rotary shade engages the second engaging portion. The rotary shade is driven for rotation by the drive actuator. At this time, when the first engaging portion is driven for rotation together with the rotary shade to engage the second engaging portion of the auxiliary shade, the auxiliary shade is moved together. That is, the auxiliary shade is able to operate without the necessity of an exclusive driving source. In addition, by adjusting engagement between the first engaging portion and the second engaging portion, it is possible to easily set the moving range and moving period of the auxiliary shade. As a result, the auxiliary shade may be moved to block non-participating light without leading to a complicated structure inside the lamp unit irrespective of the shape of the rotary shade.

The auxiliary shade may be supported coaxially with an or rotation of the rotary shade, and be a troughed member having a radius larger than that of a maximum radius portion of the rotary shade, and the auxiliary shade may move along a path of movement of the maximum radius portion of the rotary shade to the light the or the light source, the light not in formation of the distribution The radius of the auxiliary shade is desirably slightly larger than that of the maximum radius portion of the rotary shade so as to have a slight gap such that movement of the auxiliary shade is not impaired by the maximum radius portion of the rotary shade. By moving the auxiliary shade along a path of movement of the maximum radius portion of the rotary shade, a structure having substantially the same radius as the rotary shade may be provided while reliably blocking non-participating light, so it is possible to avoid an increase in size of a mechanism that includes the rotary shade.

An auxiliary actuator for independently moving the auxiliary shade may be further included. When operation of the rotary shade becomes abnormal, the auxiliary actuator may preferentially move the auxiliary shade to a position to form a light blocking state equivalent to that when the rotary shade forms a low beam light distribution pattern as a light distribution pattern. The auxiliary shade may move independently of the rotary shade by the auxiliary actuator. Because the auxiliary shade preferentially moves to a position to form a light blocking state equivalent to that when the rotary shade forms a low beam light distribution pattern, it is possible to avoid forming a light distribution pattern that gives glare to an oncoming vehicle or a pedestrian even when rotation operation cannot be normally carried out, such as when the rotary shade fails.

The auxiliary shade may have a shade ridge line portion that is able to form a low beam light distribution pattern, and may form the low beam light distribution pattern at the time when the auxiliary shade is preferentially moved. In this case, when the rotary shade fails, the auxiliary shade forms a low beam light distribution pattern, so vehicle driving may be continued by providing a minimum lighting visibility to a driver without giving glare to an oncoming vehicle or a pedestrian.

### [Effects of the Invention]

With the vehicular headlamp apparatus according to the present invention, it is possible to form a high-quality distribution while a simple structure insicle a unit when a rotary drive type cylindrical is provided.

### BRIEF DESCRIPTION OF THE DRAWINGS

### [FIG. 1]

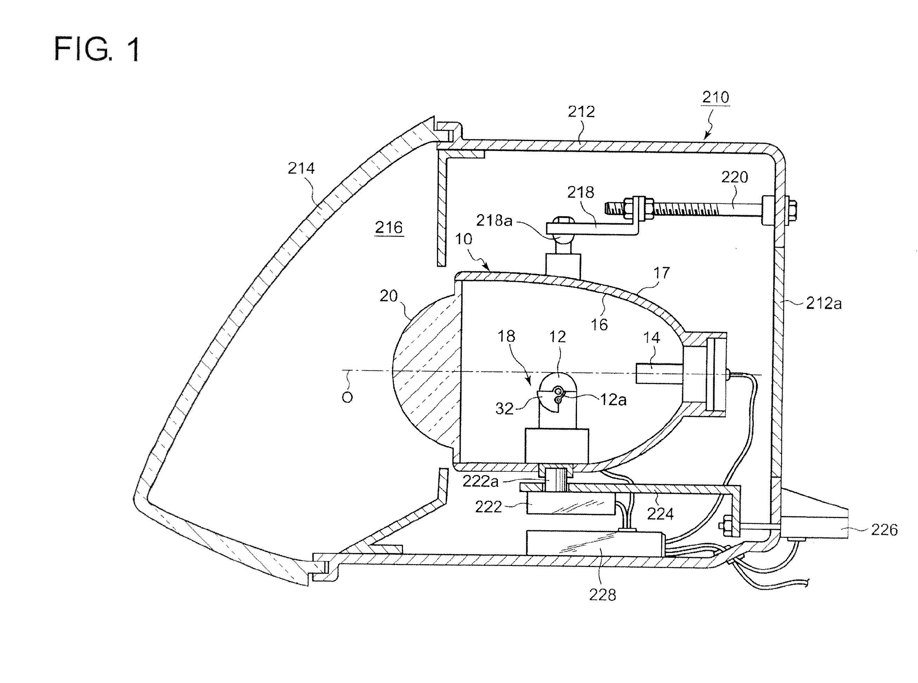

FIG. 1 is a schematic cross-sectional view illustrates the structure of a vehicular headlamp apparatus according to a present embodiment.

### [FIG. 2]

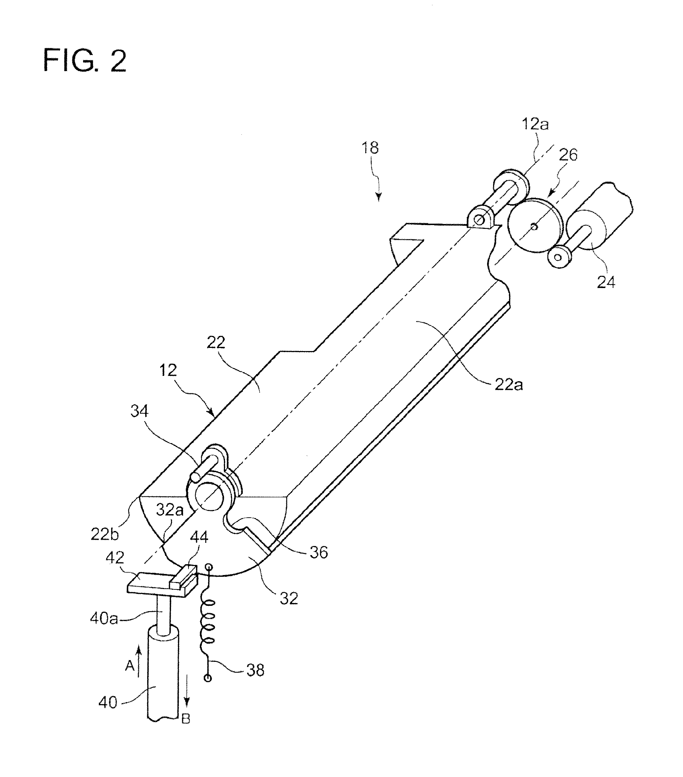

FIG. 2 is a perspective view that illustrates a rotary shade that constitutes a movable shade unit of the vehicular headlamp apparatus and a drive actuator thereof in the present embodiment.

### [FIG. 3 ]

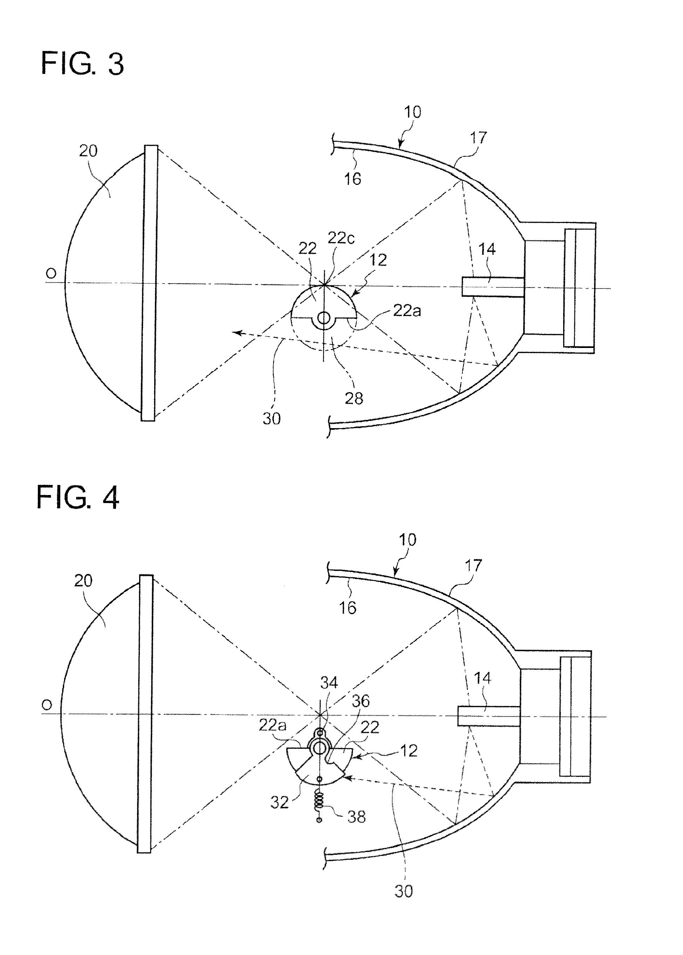

FIG. 3 is a view that illustrates an example where non-participating light passes through when a low beam light distribution pattern is formed with the rotary shade in the case of no auxiliary shade.

### [FIG. 4]

FIG. 4 is a view that illustrates a position of the rotary shade and a position of the auxiliary shade when a high beam light distribution pattern is formed by the vehicular headlamp apparatus according to the present embodiment.

### [FIG. 5]

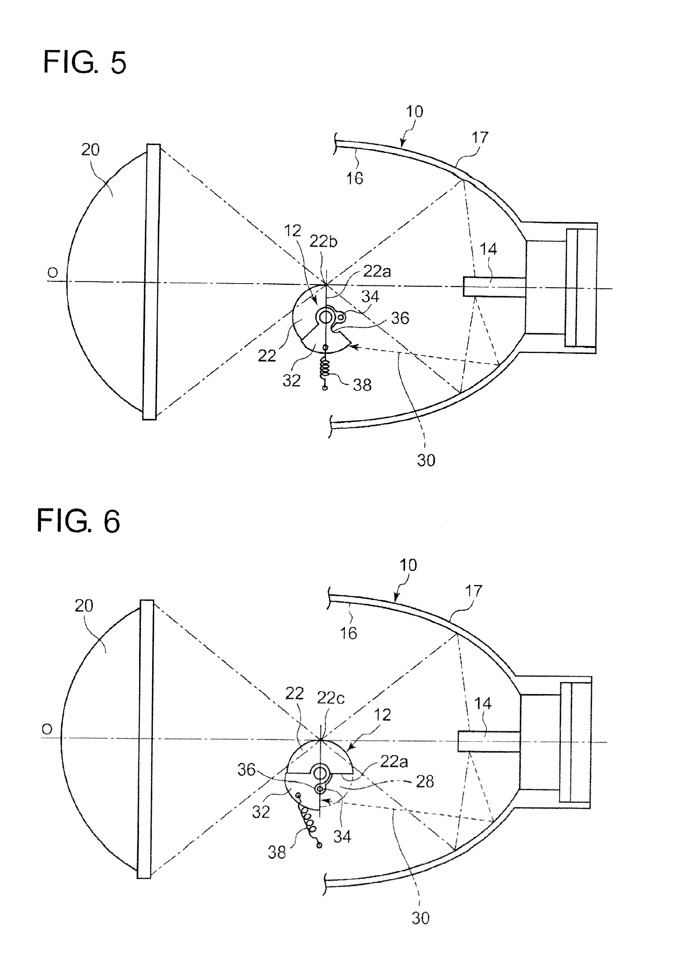

FIG. 5 is a view that illustrates a position of the rotary shade and a position of the auxiliary shade when a one side high beam light distribution pattern is formed by the vehicular headlamp apparatus according to the present embodiment.

### [FIG. 6]

FIG. 6 is a view that illustrates a position of the rotary shade and a position of the auxiliary shade when a low beam light distribution pattern is formed by the vehicular headlamp apparatus according to the present embodiment.

### [FIG. 7]

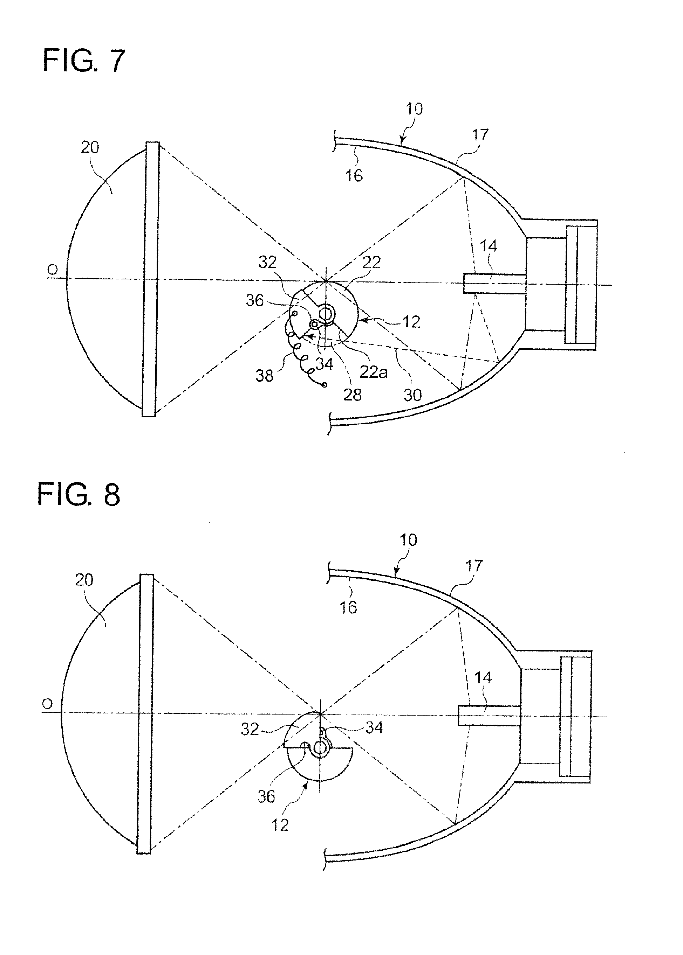

FIG. 7 is a view that illustrates a position of the rotary shade and a position of the auxiliary shade when a Dover low beam light distribution pattern is formed by the vehicular headlamp apparatus according to the present embodiment.

### [FIG. 8]

FIG. 8 is a view that illustrates a configuration that fail-safe is achieved by the auxiliary shade when the rotary shade fails in the vehicular headlamp apparatus according to the present embodiment.

### [Mode for Carrying Out the Invention]

Hereafter, a for carrying out the present invention (hereafter, referred to as will be with reference to drawings.

FIG. 1 is a schematic cross-sectional view that illustrates the internal structure of a vehicular headlamp apparatus 210 according to the present embodiment. The vehicular headlamp apparatus 210 is a variable light distribution-type headlamp that is arranged one by one at the right and left sides of the vehicle in the vehicle transverse direction. The structure of the vehicular headlamp apparatus 210 is substantially equivalent between the right side and the left side, so the structure of the vehicular headlamp apparatus 210 arranged at the right side of the vehicle will be described as a representative. The vehicular headlamp apparatus 210 includes a lamp body 212 and a translucent cover 214. The lamp body 212 has an opening at its vehicle front side and a detachable cover 212a at its rear side. The detachable cover 212a is detached at the time of replacement of a bulb 14, or the like. Then, the translucent cover 214 is connected to the opening at the front side of the lamp body 212 to thereby form a lamp chamber 216. The lamp chamber 216 accommodates a lamp unit 10 that irradiates light toward the vehicle front side. A lamp bracket 218 having a pivot mechanism 218a is formed at a portion of the lamp unit 10. The pivot mechanism 218a is the pivot center of the lamp unit 10. The lamp bracket 218 is screwed to an aiming adjustment screw 220 that is rotatably supported on a wall surface of the lamp body 212. Thus, the lamp unit 10 is supported at a predetermined position inside the lamp chamber 216 in an inclinable state that is determined by the state of adjustment of the aiming adjustment screw 220.

In addition, a rotary shaft 222a of a swivel actuator 222 is fixed to the lower surface of the lamp unit 10 to thereby allow the lamp unit 10 to be pivot horizontally.

The swivel actuator 222 is fixed to a unit bracket 224. A leveling actuator 226 arranged outside the lamp body 212 is connected to the unit bracket 224 to thereby allow the lamp unit 10 to tilt vertically.

An irradiation control unit 228 is arranged on the inner wall surface of the lamp chamber 216, for example, below the unit 10. The irradiation control unit execute for turning on or off the lamp unit 10 control for forming a light distribution pattern. The irradiation control unit 228 also executes control over the swivel actuator 222, the leveling actuator 226. and the like.

The unit 10 is formed of a movable shade unit 18 includes a rotary 12, the bulb 14 that serves as a light source, a lamp 17 that supports a reflector 16 on an inner wall, and a projection lens 20. For example, an incandescent lamp, a halogen lamp, a discharge bulb, an LED, and the like, may be used as the bulb 14. In the present embodiment, an example in which the bulb 14 is formed of a halogen lamp will be described. The reflector 16 reflects light radiated from the bulb 14. Then, light from the bulb 14 and light reflected from the reflector 16 are partially blocked by the rotary shade 12, and unblocked light advances toward the projection lens 20.

FIG. 2 is a perspective view that illustrates the rotary shade 12 that constitutes the movable shade unit 18 and a drive actuator thereof in the present embodiment. A simplified semicylindrical shade body 22 is illustrated in the drawing as the rotary shade 12; however, actually, the outer peripheral surface of the shade body 22 in the axial direction is divided into a plurality of shade regions along the circumference, and individual shades are formed in the respective shade regions. For example, a largely cutout first region 22a is a region that is used when a high beam light distribution pattern is formed. Then, when a high beam light distribution pattern is formed, the rotary shade 12 rotates so that the first region 22a faces an optical axis O in FIG. 1. In addition, a second region 22b that is a circular arc partial end is formed so that a ridge line is partially cut out, and is a region that is used when a two-way split high beam that forms a high beam state for only one-side traffic lane, that is, a so-called one side high beam, is formed. When a one side high beam is formed, the rotary shade 12 rotates to a position in which the second region 22b faces the optical axis O in FIG. 1. Other than the above, the circular arc portion of the rotary shade 12 includes a region in which a ridge line that forms a low beam used in an area of left-hand traffic regulations is formed and a region in which a ridge line that forms a low beam used in an area of right-hand traffic regulations, that is, a Dover low beam, is formed. In addition, it is applicable that a region that forms a one side high beam that gives a high beam state for a traffic opposite to that of the second region 22b is provided. In addition, in another embodiment, a plurality of plate-like shade plates extending in a direction along the axis of rotation of the rotary shade 12 may be arranged about the axis of rotation 12a. The number of divided shade regions in the rotary shady 12 is appropriately selectable as long as light blocking/unblocking made by the individual shades of adjacent regions do not interfere with each other. For example, a low beam, a high beam, right and left one side high a Dover low beam, a center-blocked beam, a center beam, or the like, may be formed. Note that FIG. 2 shows an example of the sequence of regions for forming light distribution patterns in the circumferential direction in the rotary shade 12, and the sequence of the regions is desirably appropriately determined on the basis of the frequency of use of light distribution pattern, easiness of control for rotating the rotary shade 12, easiness of cooperative operation with an auxiliary shade (discussed later), and the like.

The rotary shade 12 is driven for rotation about the axis of rotation 12a extending in the vehicle transverse direction. The rotary shade 12 is driven by, for example, a motor 24, a gear mechanism 26, and the like, that function as a drive actuator included in part of the movable shade unit 18. The motor 24 is configured so that the motor 24 is controlled by the irradiation control unit 228 and the rotary shade 12 may be accurately stopped at a predetermined angular position. Note that the rotary shade 12 may be driven by other than a motor, and may be, for example, driven by a mechanism that uses a solenoid actuator, a rack and pinion mechanism, or the like.

Incidentally, it is necessary to accommodate the movable shade unit 18, including the bulb 14 and the rotary shade 13, inside the limited internal space of the lamp unit 10 as described above, so components are required to be reduced in size, simplified, reduced in weight. Therefore, as shown in FIG. 2, both ends of the rotary shade 12 are supported, and a driving system, such as the motor 24 and the gear mechanism 26, is connected to the ends. That is, the rotary shade 12 is arranged inside the lamp unit 10 in a position in which the rotary shade 12 is substantially hung in the air.

FIG. 3 is a view that illustrates only an existing configuration showing a state where the rotary shade 12 is supported at both ends of the axis of rotation 12a and inside the lams 10 in a position in which the rotary shade 12 is hung in the air. FIG. 3 shows a state where the rotary shade 12 is so that a low beam individual shade, in which a third region 22c is formed on the shade body 22, faces the optical axis O in order to form a low light distribution In this case, light passing above the third 22c of the rotary shade 12 within from the bulb 14 and reflected light reflected from the reflector 16 is irradiated toward the projection lens 20 as light in of a low own the other hand, light blocked by the low beam individual shade and the shade body 22 is light that is not participating in formation of a low beam.

However, a cutout portion is formed in the rotary shade 12. The cutout portion is largely cut away as the first region 22a that forms a high beam light distribution pattern. A space corresponding to the cutout portion needs to be left as a working space 28 to which the maximum radius portion of the rotary shade 12, such as the third region enters when the rotary shade 12 rotates. Therefore, as shown in FIG. 3, as in the case of a beam 30 indicated by the broken line within light irradiated from the bulb 14 and reflected from the reflector 16, there is light that passes through the working space 28 and is then directly irradiated toward the projection lens 20. As described above, a portion of light below the low beam individual shade is blocked and then a dark region of the low beam light distribution pattern is formed; however, light that has passed through the working space 28 forms a bright region in the dark region of the low beam light distribution pattern. That is, light that has passed through the working space 28 becomes light that is not participating in formation of the light distribution pattern selected through operation of the rotary shade 12. Then, in the present embodiment, the auxiliary shade that moves to a position to block non-participating light from a side of the bulb 14 is provided.

The description will be continued by referring back to FIG. 2. The rotary shade 12 includes the rotatable auxiliary shade 32. The auxiliary shade 32 is supported coaxially with the axis of rotation 12a of the rotary shade 12, and is formed of a troughed member that has a radius larger than that of the maximum radius portion of the rotary shade 12 and that extends in a direction along the axis of rotation. In the case of the present embodiment, the auxiliary shade 32 has an end surface having a fan shape of about 90°, and is supported rotatably about the axis of rotation 12a. A working recess 36 is formed in the auxiliary shade 32. The working recess 36 functions as a second engaging portion that engages a working protrusion 34. The working protrusion 34 functions as a first engaging portion provided at a portion of the rotary shade 12. The working protrusion 34 is fixed to a predetermined position of the shade body 22, in the case of the example shown in FIG. 2, a of the first region 22a via a base, and moves along a predetermined orbit around the axis of rotation 12a as the rotary shade 12 rotates. On the other hand, the working recess 36 is formed at the end of the auxiliary shade 32 at a position corresponding to the orbit along the working 34 moves. Thus, as the working protrusion 34 that moves with rotation operation of the rotary shade 12 engages the working recess 36, driving force of the motor 24 is transmitted to the auxiliary shade 32 through the rotary shade 12, so the auxiliary shade 32 enters a movable state. As the rotary shade 12 further rotates, the working recess 36 is pressed by the working protrusion 34, and the auxiliary shade 32 moves together with the rotation of the rotary shade 12.

The relationship between the rotated position of the rotary shade 12 and the moved position of the auxiliary shade 32 will be described with reference to FIG. 4 to FIG. 7.
FIG. 4 shows a state where the rotary shade 12 forms a high beam light distribution pattern. In this case, the rotary shade 12 is in a rotated state where the first region 22a faces the optical axis O. In the case of the high beam light distribution pattern, basically, light is not blocked with the rotary shade 12, so it is also not necessary to block non-participating light with the auxiliary shade 32. In the case of FIG. 4, the auxiliary shade 32 is moved to a vertically lower side that is an initial position. In this case, if there is a beam 30 that is not participating in formation of the high beam light distribution pattern, because the auxiliary shade 32 is positioned at the initial position, it is possible to block non-participating light that attempts to pass through that position. In addition, as shown in FIG. 4, because a region in which light may be blocked with the auxiliary shade 32 and a region in which light may be blocked by the maximum radius portion of the rotary shade 12 substantially coincide with each other, the beam 30 may be blocked if the auxiliary shade 32 is positioned at another position.

Note that, as shown in FIG. 4, when the auxiliary shade 32 is moved to the initial position, the working protrusion 34 is placed at the position away from the working recess 36, and both do not engage each other. In this way, when the working protrusion 34 is not engaged with the working recess 36, the auxiliary shade 32 desirably includes a return mechanism so as to be automatically moved to the initial position. In FIG. 2, for example, a tension spring 38 is connected to a portion of the auxiliary shade 32 as the return mechanism, and the auxiliary shade 32 is automatically returned to the initial position of FIG. 2, FIG. 4, or the like, when no external force acts on the auxiliary shade 32. In this way, by automatically returning the auxiliary shade 32 to the initial position, it is possible to a situation that the auxiliary shade 32 becomes a shade member that impairs formation of a high beam when the high beam light distribution pattern is formed. Note that, in FIG. 4, the working protrusion 34 the optical axis O; however, the working protrusion 34 is formed at the side of the end of the axis of rotation 12a of the rotary shade 12, so the working protrusion 34 does not impair formation of the high beam light distribution pattern. Note that, in another embodiment, a torsion spring arranged around the axis of rotation 12a may be used instead of the tension spring 38, and similar automatic return operation may be implemented.

FIG. 5 shows a state where the rotary shade 12 rotates by about 90° in the clockwise direction from the state shown in FIG. 4 to form the one side high beam light distribution pattern. In this case, the rotary shade 12 is in a rotated state where the second region 22b faces the optical axis O. In the case of the one side high beam light distribution pattern, because the first region 22a that forms the high beam light distribution pattern is placed to face the bulb 14, a region corresponding to the region in which light may be blocked with the auxiliary shade 32 may be shielded with the maximum radius portion of the rotary shade 12. Thus, it is not necessary to block non-participating light with the auxiliary shade 32. Therefore, the auxiliary shade 32 is moved to the vertically lower side that is the initial position. In this case, if there is a beam 30 that is not participating in formation of the one side high beam light distribution pattern, as shown in FIG. 5, it is possible to block the beam 30 in such a manner that the auxiliary shade 32 is positioned at the initial position. Note that, as shown in FIG. 5, the working protrusion 34 moves toward the working recess 36 as the rotary shade 12 is pivoted; however, both do not engage each other yet. Thus, the auxiliary shade 32 maintains a position at the initial position by return operation (return urging force) of the tension spring 38.

Note that, in this case, the auxiliary shade 32 may be moved to a position at which the auxiliary shade 32 does not block light participating in formation of the one side high beam. For example, depending on the shape of the individual shade formed on the shade body 22, a region that partially allows non-participating light to pass through may be formed as the rotary shade 12 rotates. In this case, a period during which the working protrusion 34 is with the recess 36 is adjusted, and the auxiliary shade 32 is moved so as to be able to block light in that region.

Figs 6 shows a state the rotary shade 12 rotates by about 90° in the clockwise direction from the state in FIG. 5 to form the low beam right distribution pattern as in the of FIG. 3. The rotary 12 rotates so that the individual shade in which the third region 22c for low beam is formed faces the optical axes O. In this case, as described above, the working space 28 is formed, so non-participating light may be irradiated toward the projection lens 20; however, the auxiliary shade 32 prevents the irradiation in the case of FIG. 6. As shown in FIG. 6, the working protrusion 34 that moves with the rotation of the rotary shade 12 engages the working recess 36 of the auxiliary shade 32 to move the auxiliary shade 32 in the clockwise direction to thereby cover part of the working space 28. As a result, it is possible to block the beam 30 that is not participating in formation of the low beam light distribution pattern. Note that, in this case, it is desirable that the end of the auxiliary shade 32 overlaps with part of the rotary shade 12 when viewed from the bulb 14 side so as not to form a gap that allows light not participating in formation of the low beam light distribution pattern to pass through toward the projection lens 20. When the rotary shade 12 rotates in the counterclockwise direction to release engagement between the working protrusion 34 and the working recess 36, the auxiliary shade 32 returns toward the initial position by the restoring force of the tension spring 38.

Note that the timing at which the working protrusion 34 engages the working recess 36 may be varied by appropriately adjusting the position at which the working protrusion 34 is formed on the rotary shade 12. Because a situation of occurrence of light not participating in formation of the light distribution pattern may be recognized in the designing stage of the lamp unit 10, adjusting the engagement timing is desirably appropriately determined in that stage. In addition, the situation of occurrence of non-participating light varies depending on the sequence of arrangement of the individual shades and the shapes of the individual shades in the rotary shade 12, so it is desirable to adjust the timing at which the working protrusion 34 the working recess 36. In addition, the size of the auxiliary 32 is also desirably determined on the basis of the situation of occurrence of non-participating light.

FIG. 7 a state where the rotary shade 12 further rotates in the clockwise direction from the state shown in FIG. 6 to the Dover low light distribution pattern. In the case of FIG. 7, the maximum radius portion of the rotary shady 12 does not completely enter the working space 28. That is, there is a possibility that not participating in of the Dover low beam distribution pattern is allowed to pass through. Then, the auxiliary shade 32 moves to a position corresponding to the rotated state of the rotary shade 12, which forms the Dover low beam light distribution pattern, by engagement operation of the working protrusion 34 with the working recess 36. That is, the working space 28 that allows the non-participating beam 30 to pass through is formed; however, the auxiliary shade 32 prevents the passage of non-participating light. As a result, it is possible to form a high-quality Dover low beam light distribution pattern that does not include an unnecessary bright region.

In this way, by moving the auxiliary shade 32 in accordance with the rotated state of the rotary shade 12, it is possible to form a high-quality light distribution pattern that does not include an unnecessary bright region, that is, leakage of light. Note that, as the angle of the fan shape of the auxiliary shade 32 increases, it becomes easy to block light not participating in formation of a light distribution pattern; however, if the angle is increased more than necessary, light participating in formation of a light distribution pattern may also be blocked. Thus, the angle of the fan shape of the auxiliary shade 32 is desirably set to a necessary minimum in consideration of the surface shape of the shade body 22 and the size of the working space 28. In addition, by forming the auxiliary shade 32 to have a necessary minimum size, it is possible to avoid an increase in size and weight of the components inside the lamp unit 10, thus making it possible to contribute to size reduction and simplification of the vehicular headlamp apparatus 210 overall. Furthermore, the auxiliary shade 32 moves together with the rotary shade 12 with an extremely simple structure, that is, engagement between the working protrusion 34 and the working recess 36, so the auxiliary shade 32 is able to contribute to suppressing a complicated mechanism inside the lamp unit 10 and complicated control.

Incidentally, when the rotary shade 12 that is driven by the motor 24, or the like, is used, it is preferable to take measures against failure. If some failure occurs in the motor 24 or the mechanism 26 for rotating the rotary shade 12 or a control thereof, the position of the rotary shade 12 is fixed in a state where the failure has occurred. For example, when the rotary shade 12 fails while the rotary shade 12 is the high beam light distribution pattern, the vehicular headlamp apparatus 210 is in a high beam state, so may give glare to an vehicle or a pedestrian. Then, the auxiliary shade 32 to the present embodiment may have a function of executing fail-safe in addition to the above described function of blocking light not participating in formation of a light distribution pattern.

In the present embodiment as shown in FIG. 2, a linear solenoid 40 that functions as an auxiliary actuator for independently moving the auxiliary shade 32 is provided. A coupling member 44 that engages a working block 42 is provided at a portion of the auxiliary shade 32. The working block 42 is formed at the distal end of a rod 40a of the solenoid 40. When the solenoid 40 extends in the arrow A direction, the working block 42 presses the coupling member 44 upward to preferentially rotate the freely rotatable auxiliary shade 32 in the clockwise direction against the urging force of the tension spring 38. As a result, as shown in FIG. 8, the auxiliary shade 32 enters into the optical axis O. That is, the auxiliary shade 32 is moved to a position to form a light blocking state equivalent to that when the rotary shade 12 forms the low beam light distribution pattern as the light distribution pattern. As a result, even if the motor 24, or the like, fails and the rotary shade 12 is stopped in a position to form the high beam light distribution pattern, the auxiliary shade 32 that is preferentially moved because of the failure blocks part of light. Then, even if there is an oncoming vehicle or a pedestrian, glare is not given to them. Note that, when the rod 40a of the solenoid 40 is retracted in the arrow B direction, the auxiliary shade 32 is pulled back in the counterclockwise direction by the urging force of the tension spring 38 and returns to the initial position.

In addition, in the auxiliary shade 32 that preferentially moves at the time of the above described fail-safe, a shade ridge line portion 32a that is able to form the low beam light distribution pattern may be formed at the portion that enters into the optical axis O. In this case, the low beam light distribution pattern may be formed by fail-safe operation of the auxiliary shape 32. As described above, the radius of the auxiliary shade 32 is slightly larger than the maximum radius portion of the rotary shady 12. Thus, it is that a portion forming the shade ridge line portion 32a of the auxiliary shade 32 is subjected to thin-wall treatment, or the like, to thereby bring the shade ridge line portion 32a of the auxiliary shade 32 as close as possible to the ridge position at the time when the low tight distribution pattern is with the rotary 12. In addition, in embodiment, it is applicable that the auxiliary 32 is configured to eccentrically rotate and, at the of fail-safe the shade ridge line portion 32a is shifted to the low beam ridge line position of the rotary shade 12. Note that, as above, in order to accurately move the auxiliary shade 32 to the position to form the light blocking state equivalent to that when the rotary shade 12 forms the low beam light distribution pattern as the light distribution pattern, it is desirable to provide a stopper, or the like, at the moving end of the auxiliary shade 32. In another embodiment, when it is acceptable to have simple fail-safe, it is only necessary that the auxiliary shade 32 its moved by the solenoid 40. In addition, for the shape of the auxiliary shade 32 as well, the function of blocking light not participating in formation of the light distribution pattern may be given a higher priority than the accuracy of formation of the shape of the low beam at the time of fail-safe.

Note that failure in the rotation control system of the rotary shade 12 may be, for example, easily detected by comparing a rotation control amount from the irradiation control unit 228 to the motor 24 with an actual rotation amount of the rotary shade 12. In addition, failure may be detected from a variation in driving current value, or the like, of the motor 24. Then, control of the solenoid 40 is executed by the irradiation control unit 228.

In this way, by giving a fail-safe function to the auxiliary shade 32, the simple structure in the lamp unit 10 may be maintained while, even when failure occurs in the rotation control system of the rotary shade 12, vehicle driving may be continued by providing a minimum lighting visibility to a driver without giving glare to an oncoming vehicle or a pedestrian. In addition, by forming the shade ridge line portion 32a in the auxiliary shade 32, it is possible to provide a higher quality low beam light distribution pattern even in the event of occurrence of failure.

The present invention is not limited to the above described embodiments; it may include alterations, such as various change, on the or the knowledge of a person skilled in the art. The configuration shown in the drawings is intended to illustrate an example. As long as a configuration is able to achieve a similar function, the configuration may be appropriately changed, and similar effects may be obtained.

### [Description of the Reference Numerals]

- 10: LAMP UNIT
- 12: ROTARY SHADE
- 12a: AXIS OF ROTATION
- 14: BULB
- 20: PROJECTION LENS
- 30: BEAM
- 32: AUXILIARY SHADE
- 34: WORKING PROTRUSION
- 36: WORKING RECESS
- 210: VEHICULAR HEADLAMP APPARATUS
- 222a: ROTARY SHAFT

## Claims

1. A vehicular headlamp apparatus (210) **characterized by** comprising:
a light source (14) that is able to irradiate light forward of a vehicle through a projection lens (20);
a rotary shade (12) that is able to form a plurality of types of light distribution patterns using the light from the light source (14) and that selectively forms any one of the plurality of light distribution patterns in accordance with a rotated state when the rotary shade (12) is driven for rotation,
a drive actuator (24) that drives the rotary shade (12) for rotation; and
an auxiliary shade (32) that is able to move in accordance with the rotated state of the rotary shade (12) and that moves to a position to block light from a side of the light source (14), the light not participating in formation of the light distribution pattern selected through operation of the rotary shade (12).

2. The vehicular headlamp apparatus (210) according to claim 1, **characterized in that** the auxiliary shade (32) has a second engaging portion (36) that engages a first engaging portion (34) provided at a portion of the rotary shade (12), and moves together with the rotary shade (12) in such a manner that the first engaging portion (34) that moves with rotation operation of the rotary shade (12) engages the second engaging portion (36).

3. The vehicular headlamp apparatus (210) according to claim 1 or 2, **characterized in that** the auxiliary shade (32) is supported coaxially with an axis of rotation (12a) of the rotary shade (12), and is a troughed member having a radius larger than that of a maximum radius portion of the rotary shade (12), and the auxiliary shade (32) moves along a path of movement of the maximum radius portion of the rotary shade (12) to block the light from the side of the light source (14), the tight not participating in formation of the light distribution pattern.

4. The vehicular headlamp apparatus (210) according to any one of claims 1 to 3, **characterized in that**
the vehicular headlamp apparatus (210) further includes an actuator (40) for independently moving the auxiliary shade (32), and
when operation of the rotary shade (12) becomes abnormal, the auxiliary actuator (40) preferentially moves the auxiliary shade (32) to a position to form a light blocking state equivalent to that when the rotary shade (12) forms a low beam light distribution pattern as a light distribution pattern.

5. The vehicular headlamp apparatus (210) according to claim 4, **characterized in that** the auxiliary shade (32) has a shade ridge line portion (32a) that is able to form a low beam light distribution pattern, and forms the low beam light distribution pattern
at the time when the auxiliary shade (32) is preferentially moved.
